# EUROPÄISCHE PATENTSCHRIFT

(11) **EP 3 008 352 B1**
(45) Veröffentlichungstag und Bekanntmachung des Hinweises auf die Patenterteilung: **01.09.2021**
(21) Anmeldenummer: 14727500.2
(22) Anmeldetag: 30.05.2014
(51) Int. Cl.: F16B 21/07, F16B 21/04

(54) **STECKKUPPLUNG MIT EINEM ELASTISCH VERFORMBAREN KUPPLUNGSTEIL SOWIE EINBAUVERFAHREN DAFÜR**
PLUG-IN COUPLING HAVING AN ELASTICALLY DEFORMABLE COUPLING PART, AND INSTALLATION METHOD THEREFOR
SYSTÈME DE COUPLAGE PAR EMBOÎTEMENT COMPORTANT UN ÉLÉMENT DE COUPLAGE DÉFORMABLE ÉLASTIQUEMENT AINSI QUE PROCÉDÉ DE MONTAGE ASSOCIÉ

(30) Priorität: 12.06.2013 DE 202013005336 U
(43) Veröffentlichungstag der Anmeldung: 20.04.2016
(73) Patentinhaber: Böllhoff Verbindungstechnik GmbH, 33649 Bielefeld (DE)
(72) Erfinder: STEFFENFAUSEWEH, Sandra, 33415 Verl (DE); HESSE, Wolfgang, 33397 Rietberg (DE)
(74) Vertreter: HWP Intellectual Property
(86) Internationale Anmeldenummer: PCT/EP2014/061265
(87) Internationale Veröffentlichungsnummer: WO 2014/198562

(56) Entgegenhaltungen:
- DE-A1- 3 937 636
- DE-B3-102006 020 697
- DE-U1-202005 011 420
- FR-A1- 2 608 233
- FR-A5- 2 184 291
- US-A- 3 853 414

## Beschreibung

### 1. Gebiet der Erfindung

Die vorliegende Erfindung betrifft eine Steckkupplung bestehend aus einem elastisch verformbaren Kupplungsteil und einem bolzenartigen Element mit Kopf, sodass mit dem elastisch verformbaren Kupplungsteil und dem bolzenartigen Element eine Steckverbindung zwischen einem ersten und einem zweiten Bauteil herstellbar ist.

### 2. Hintergrund der Erfindung

Eine Steckkupplung dieser Bauart ist aus US A-5 580 204 bekannt. Bei dieser Steckkupplung besteht das Kupplungsteil aus einer Kugelpfanne, einem Einführkonus sowie einem an dem Einführkonus angeformten Flansch. Das Kupplungsteil ist unmittelbar in ein Loch eines plattenförmigen Bauteils einsetzbar. Das Kupplungsteil ist mit axial verlaufenden Schlitzen versehen, die der Kugelpfanne und dem Einführkonus die zum Einschnappen und Lösen des Kupplungsteils erforderliche Elastizität verleihen. Da das den kugelförmigen Kopf des bolzenähnlichen Elements aufnehmende pfannenförmige Kupplungsteil unmittelbar in einem Loch des ersten Bauteils sitzt und der bolzenähnliche Vorsprung mit dem kugelförmigen Kopf unmittelbar an dem zweiten Bauteil befestigt ist, dürfte die Steckkupplung nur eine begrenzte Schwingungsentkopplung zwischen dem ersten und zweiten Bauteil ermöglichen. Des Weiteren führt die Längsrichtung des Kupplungsteils mit verlaufenden Schlitzen dazu, dass die Festigkeit des Kupplungsteils geschwächt ist.

Weitere Konstruktionsmöglichkeiten von derartigen Steckkupplungen sind in EP 0 902 198 B1 und EP 1 746 294 A1 beschrieben. Diese beiden Konstruktionsaltemativen eines Kupplungsteils einer Steckkupplung zeichnen sich durch eine radial außen liegende Haltestruktur in Bezug auf die Kugelpfanne des Kupplungsteils aus. Diese Haltestruktur wird bspw. in eine Fassung seitlich eingeschoben, wie es in EP 0 902 198 B1 gezeigt ist. Gemäß der anderen bekannten Konstruktion des Kupplungsteils wird das Kupplungsteil in die Öffnung eines plattenähnlichen Bauteils eingeschnappt. In beiden Konstruktionsalternativen ist die Kugelpfanne radial beabstandet von der umgebenden Haltestruktur angeordnet, wodurch eine Schwingungsdämpfung innerhalb der Steckkupplung sowie ein gewisser Toleranzausgleich zwischen Kupplungsteil und aufzunehmendem bolzenähnlichen Vorsprung gewährleistet sind.

Die aus dem Stand der Technik bekannten Konstruktionsmöglichkeiten eines Kupplungsteils einer Steckkupplung sind einerseits nur in komplexe Haltestrukturen einsetzbar, wodurch ein hoher Installationsaufwand generiert wird. Andererseits wird durch die bekannte Schnappverbindung zwischen Kupplungsteil und Bauteil kein ausreichender Halt für das Kupplungsteil bereitgestellt, sodass die Steckkupplung keine verlässliche Verbindung herstellt.

Aus DE 10 2006 020 697 B3 ist ein Drehverschluss zum Verbinden von zwei Bauteilen bekannt. Der Drehverschluss weist eine Deckplatte und einen an die Deckplatte angeformten sowie sich von der Deckplatte weg erstreckenden Fußschaft auf, an den in einem Abstand von der Deckplatte wenigstens zwei einander gegenüberliegende und sich von dem Fußschaft radial nach außen erstreckende starre Fixiersockel angesetzt sind. Weiterhin ist eine Fixieranordnung zum Fixieren des Drehverschlusses an einem ersten Bauteil vorhanden, die wenigstens zwei radial federnde Federschenkel aufweist, die jeweils zwischen zwei Fixiersockeln angeordnet sowie mit einem Ende mit dem Fußschaft verbunden sind und sich mit dem anderen freien Ende von dem Fußschaft weg in Richtung der Deckplatte erstrecken.

DE 39 37 636 A1 beschreibt eine lösbare Kugelkupplung. Diese weist ein führendes Organ und ein geführtes Organ auf, die miteinander über ein Kugelgelenk mit einem Kugelkopf und einem Kugelsitz verbinden sind. Der Kugelsitz ist teilweise begrenzt von einer Mehrzahl von Flügeln, die elastisch von einem Block ausgehend deformierbar sind, der in einem Durchbruch des zweiten Organs montiert ist und mit diesem über einen Bajonettverschluss gekoppelt ist.

Schließlich offenbart FR 2 608 233 A1 eine Anordnung mit einem weiblichen Element und einer Komponente einschließlich eines flachen Teils, die mit einem Loch versehen ist, um das weibliche Element aufzunehmen. Das Element umfasst ein gewölbtes Teil, in dem ein Gehäuse mit einer konkaven kugelförmigen Zone vorgesehen ist, die zur Aufnahme einer kugelförmigen Drehverbindung geeignet ist, die in das so elastisch verformte Schalenstück eingreifen soll. Das Element umfasst ein Haltemittel, das mindestens einen radial vorspringenden Bolzen und ein in axialer Richtung gegenüber dem Bolzen versetztes Anschlagmittel umfasst. Mindestens eine Kerbe, die dem Bolzen entspricht, ist in der Kante des Lochs für den Durchgang dieses Bolzens vorgesehen. Das weibliche Element umfasst ferner ein Mittel zum Stoppen der Drehung des Elements in Bezug auf die Komponente, das in der Lage ist, mit einem komplementären Rotationsstoppmittel zu interagieren, das an dem flachen Teil vorgesehen ist.

Es ist daher die Aufgabe vorliegender Erfindung, ein Kupplungsteil und eine damit herstellbare Steckverbindung bereitzustellen, die eine verlässliche Verbindung zwischen zwei Bauteilen sicherstellt.

### 3. Zusammenfassung der Erfindung

Die obige Aufgabe wird durch ein elastisch verformbares Kupplungsteil gemäß dem unabhängigen Anspruch 1, eine Steckkupplung gemäß dem unabhängigen Anspruch 9, durch ein Bauteil mit einem bolzenartigen Element in Verbindung mit einem anderen Bauteil mit dem erfindungsgemäßen Kupplungsteil gemäß dem unabhängigen Anspruch 10 sowie durch ein Einbauverfahren des Kupplungsteils gemäß dem unabhängigen Anspruch 11 gelöst.

Das erfindungsgemäße elastisch verformbare Kupplungsteil dient der Herstellung einer Steckverbindung zum Verbinden eines ersten Bauteils und eines zweiten Bauteils. Das Kupplungsteil weist die folgenden Merkmale auf: einen inneren Verbindungsbereich, in dem über eine Rastverbindung ein Kopf eines bolzenartigen Elements des zweiten Bauteils aufnehmbar ist, und einen äußeren Befestigungsbereich, der über einen Bajonettverschluss mit einem Schlüsselloch des ersten Bauteils verbindbar ist, wobei der Befestigungsbereich mindestens eine radiale Anlagefläche umfasst, von der axial beabstandet mindestens ein erster radialer Vorsprung angeordnet ist, der einen Bajonettspalt für eine drehende Aufnahme des ersten Bauteils bildet, und von der axial beabstandet mindestens ein zweiter radialer Vorsprung angeordnet ist, der über eine radial einwärts gerichtete Bewegbarkeit einen Verrastungsspalt für das erste Bauteil zwischen zweitem Vorsprung und der mindestens einen radialen Anlagefläche bildet.

Das erfindungsgemäße Kupplungsteil wird in einem Schlüsselloch des ersten Bauteils mithilfe eines Bajonettverschlusses befestigt. Ein derartiges Schlüsselloch wird durch eine runde oder ovale Öffnung gebildet, die zumindest eine radiale Ausbuchtung aufweist. Vorzugsweise ist die mindestens eine radiale Ausbuchtung eckig ausgebildet, wobei auch andere Formen bevorzugt sind, solange durch diese radiale Ausbuchtung der mindestens eine radiale Vorsprung des Bajonettverschlusses des Kupplungsteils durchführbar ist. Der Bajonettverschluss zwischen dem Kupplungsteil und dem ersten Bauteil wird dadurch erzeugt, dass das Kupplungsteil in das Schlüsselloch des ersten Bauteils gesteckt und dann um einen bestimmten Winkelbereich um seine Längsachse gedreht wird. Auf diese Weise verriegelt sich das erste Bauteil am Randbereich des Schlüssellochs im Bajonettspalt des Kupplungsteils. Somit wird durch die drehende Bewegung des Kupplungsteils der Randbereich des Schlüssellochs zwischen dem ersten radialen Vorsprung und der radialen Anlagefläche in dem dort gebildeten Bajonettspalt aufgenommen.

Zur Verstärkung des Bajonettverschlusses zwischen dem Kupplungsteil und dem ersten Bauteil ist eine zusätzliche Verrastung des Randbereichs des Schlüssellochs zwischen dem mindestens einen zweiten radialen Vorsprung und der radialen Anlagefläche vorgesehen. Zu diesem Zweck ist der mindestens eine zweite radiale Vorsprung in radialer Richtung federnd angeordnet, sodass er während des Einsetzens des Kupplungsteils in das Schlüsselloch durch die zentrale Öffnung des Schlüssellochs hindurch bewegt werden kann, damit der Randbereich des Schlüssellochs zwischen dem mindestens einen zweiten radialen Vorsprung und der radialen Anlagefläche einrastet. Somit wird für eine verlässliche Verbindung zwischen Kupplungsteil und erstem Bauteil der Randbereich des Schlüssellochs des ersten Bauteils in dem Bajonettspalt und in dem Verrastungsspalt gehalten. Diese Verbindung gewährleistet Beständigkeit, während gleichzeitig eine bevorzugte Elastizität des Materials des Kupplungsteils und Toleranzen in der formschlüssigen Verbindung zwischen dem Kupplungsteil und dem aufzunehmenden bolzenähnlichen Element für eine ausreichende Schwingungsdämpfung und eine bevorzugte Bewegbarkeit zwischen Kupplungsteil und bolzenähnlichem Element sorgen.

Vorzugsweise ist die mindestens eine radiale Anlagefläche, die den Bajonettspalt mit dem mindestens einen ersten radialen Vorsprung und den Verrastungsspalt mit dem mindestens einen zweiten radialen Vorsprung bildet, als ein umlaufender und zusammenhängender Anlageflansch ausgebildet. Dieser Anlageflansch erstreckt sich in radialer Richtung bezogen auf die Längsachse des Kupplungsteils. Im Hinblick auf die radiale Ausdehnung des umlaufenden Anlageflansches ist es bevorzugt, diesen so groß auszubilden, dass er im eingesetzten Zustand des Kupplungsteils das Schlüsselloch vollständig abdeckt. Auf diese Weise dichtet der Anlageflansch das Schlüsselloch im ersten Bauteil ab. Alternativ dazu ist es ebenfalls bevorzugt, am radial äußeren Rand des Anlageflansches umlaufend eine Dichtlippe vorzusehen, die das Schlüsselloch abdeckt und abdichtet. Die Dichtlippe besitzt vorzugsweise eine größere Flexibilität und damit Anpassbarkeit an Unebenheiten im Vergleich zum Anlageflansch.

Gemäß einer bevorzugten Ausführungsform des erfindungsgemäßen Kupplungsteils sind jeweils zwei einander gegenüberliegend angeordnete erste radiale Vorsprünge und zweite radiale Vorsprünge im Befestigungsbereich des Kupplungsteils vorgesehen. Es ist ebenfalls bevorzugt, eine andere Anzahl von ersten und zweiten radialen Vorsprüngen im Befestigungsbereich des Kupplungsteils zu nutzen. Wird bspw. ein Schlüsselloch mit nur einer radialen Außenbuchtung verwendet, dann ließe sich mit nur einem ersten radialen Vorsprung in Kombination mit bspw. 2, 3 oder noch mehr zweiten radialen Vorsprüngen zur Bildung des Bajonettspalts und des Verrastungsspalts ein Kupplungsteil mit optimaler Befestigungsstabilität bereitstellen.

Gemäß einer weiteren bevorzugten Ausführungsform sind der erste und zweite radiale Vorsprung um einen bestimmten Winkelbereich umfänglich versetzt zueinander im Befestigungsbereich des Kupplungsteils angeordnet. Um bei der drehenden Befestigung des Kupplungsteils im Bajonettspalt zu vermeiden, dass der mindestens eine zweite radiale Vorsprung in den Bereich einer radialen Ausbuchtung des Schlüssellochs gedreht wird, ist der Bajonettspalt in Abstimmung mit der Anordnung des zweiten radialen Vorsprungs nach einer bestimmten Länge blockiert. Aufgrund dieser Konstruktion ist bei einer Drehung des Kupplungsteils um seine Längsachse das erste Bauteil im Bereich des Schlüssellochs nicht aus dem Verrastungsspalt entfernbar. Des Weiteren ist durch die Blockade des Bajonettspalts gewährleistet, dass der Randbereich des Schlüssellochs, also das erste Bauteil, immer gleichzeitig im Bajonettspalt und im Verrastungsspalt angeordnet ist. Dies gewährleistet einen verlässlichen Halt des Kupplungsteils am ersten Bauteil, wobei vorzugsweise eine Mehrzahl von Bajonettspalten und eine Mehrzahl von Verrastungsspalten umfänglich gleichmäßig verteilt im Befestigungsbereich des Kupplungsteils angeordnet sind.

Gemäß einer weiteren bevorzugten Ausführungsform des erfindungsgemäßen Kupplungsteil ist der Bajonettspalt sich zumindest teilweise in radialer und/oder in axialer Richtung des Kupplungsteils verjüngend ausgebildet, um einen verlässlichen Halt des Kupplungsteils am ersten Bauteil zu unterstützen.

Das Schlüsselloch im ersten Bauteil und das Kupplungsteil sind im Vergleich zueinander mit gewissen Toleranzen gefertigt, um das Einsetzen des Kupplungsteils im Schlüsselloch zu erleichtern. Nichtsdestotrotz ist es erforderlich, dass nach Herstellen des Bajonettverschlusses zwischen Kupplungsteil und erstem Bauteil, d. h. nach Drehen des Kupplungsteils um seine Längsachse und Einführen des Randbereichs des Schlüssellochs in den Bajonettspalt, ein fester Halt zwischen dem Kupplungsteil und dem ersten Bauteil gewährleistet ist. Daher weist der Bajonettspalt an seinem Anfang, d. h. an dem dem blockierten Bereich abgewandten Ende, eine bestimmte Höhe gemessen in axialer Richtung des Kupplungsteils und eine bestimmte Breite gemessen in radialer Richtung des Kupplungsteils auf. Im Verlauf des Bajonettspalts in Richtung zum blockierten Bereich des Bajonettspalts verringert sich die axiale Höhe und/oder die radiale Breite des Bajonettspalts. Die auf diese Weise erzielte Verjüngung in eine oder in beide Richtungen erzeugt einen Presssitz zwischen dem Kupplungsteil und dem ersten Bauteil. Eine Verringerung der axialen Höhe des Bajonettspalts wird dadurch erzielt, dass vorzugsweise zumindest eine der einander gegenüberliegend angeordneten Wände des Bajonettspalts auf die gegenüberliegende Wand zulaufend angeschrägt angeordnet ist. Eine Verjüngung des Bajonettspalts in radialer Richtung wird vorzugsweise dadurch erzielt, dass sich der Außendurchmesser des Kupplungsteils im Bajonettspalt im Verlauf des Bajonettspalts zum blockierten Ende vergrößert. In diesem Zusammenhang ist es ebenfalls bevorzugt, dass eine Mehrzahl von Vorsprüngen an den begrenzenden Wänden des Bajonettspalts vorgesehen ist, die jeweils lokal eine Verjüngung des Bajonettspalts in radialer und/oder axialer Richtung erzeugen.

Es ist des Weiteren bevorzugt, dass auch der Verrastungsspalt zumindest in axialer Richtung bezogen auf das Kupplungsteil teilweise verjüngt ausgebildet ist. Eine derartige Verjüngung in axialer Richtung des Kupplungsteils ist bspw. durch eine rippenartige Erhöhung auf der radialen Anlagefläche gegenüber dem zweiten radialen Vorsprung oder durch eine derartige Rippe am zweiten radialen Vorsprung oder durch zwei einander gegenüberliegend angeordnete Rippen im Verrastungsspalt erzielbar.

Gemäß einer weiteren bevorzugten Ausführungsform des erfindungsgemäßen Kupplungsteils ist benachbart zu einer Einführöffnung des bolzenartigen Elements eine stegartige Struktur vorgesehen, mit der das Kupplungsteil in das Schlüsselloch einsetzbar, vorzugsweise eindreh- und einrastbar, ist. In Abhängigkeit von der Gestaltung der stegartigen Struktur des Kupplungsteils unterstützt diese Struktur das Eintreffen des Kupplungsteils in axialer Richtung in das Schlüsselloch und das Drehen des Kupplungsteils im Schlüsselloch. Zu diesem Zweck sind zumindest in axialer Richtung des Kupplungsteils vorstehende Abschnitte angeordnet, über die ein ausreichendes Drehmoment zum Eindrehen des Kupplungsteils in das Schlüsselloch erzeugt werden kann. Diese axial vorstehenden Abschnitte sind vorzugsweise in radialer Richtung orientiert, um ein Drehen des Kupplungsteils zu vereinfachen. Weitere bevorzugte axiale Abschnitte, die vorzugsweise parallel zum Umfang des Kupplungsteils angeordnet sind, unterstützen ein eventuelles Komprimieren des Kupplungsteils in radialer Richtung.

Vorzugsweise besteht das erfindungsgemäße Kupplungsteil aus einem elastischen Kunststoff oder aus Metall. Basierend auf dieser Materialwahl ist der mindestens eine zweite radiale Vorsprung ausreichend federnd ausgebildet, damit die Verrastung des ersten Bauteils im Verrastungsspalt sichergestellt ist. Zudem liefert diese Materialwahl die geforderte Stabilität des Kupplungsteils, die für einen verlässlichen Bajonettverschluss zwischen Kupplungsteil und erstem Bauteil nötig ist.

Vorliegende Erfindung umfasst zudem eine Steckkupplung, die ein Kupplungsteil gemäß den oben beschriebenen Ausführungsformen sowie ein bolzenartiges Element mit einem Kopf umfasst. Zu diesem Zweck weist die Steckkupplung in ihrem inneren Verbindungsbereich vorzugsweise eine Kugelpfanne auf, in der ein Kugelkopf des bolzenartigen Elements aufnehmbar ist. Der innere Verbindungsbereich ist vorzugsweise komplementär oder ähnlich zum Kopf des bolzenartigen Elements ausgebildet. Daher ist es ebenfalls denkbar, dass der Kopf oval, eckig oder andersartig geformt ausgebildet ist, um mit einem komplementär dazu ausgebildeten Verbindungsbereich des Kupplungsteils eine Rastverbindung bilden zu können.

Des Weiteren umfasst vorliegende Erfindung ein Bauteil mit einem bolzenartigen Element und einem Kopf, das mit einem anderen Bauteil über ein Kupplungsteil gemäß den oben beschriebenen Ausführungsformen verbunden ist, welches in einem Schlüsselloch des anderen Bauteils angeordnet ist.

Um das oben beschriebene Kupplungsteil mit einem Bauteil mit einem Schlüsselloch zu verbinden, sind die folgenden Schritte vorgesehen: Ausrichten des Kupplungsteils auf das Schlüsselloch, sodass der mindestens eine erste radiale Vorsprung gegenüber einer stegförmigen Ausbuchtung des Schlüssellochs angeordnet ist, Einsetzen des Kupplungsteils in axialer Richtung in das Schlüsselloch und gleichzeitiges Komprimieren des Kupplungsteils in radialer Richtung, um das erste Bauteil im Verrastungsspalt einzurasten, und Drehen des Kupplungsteils um die Längsachse derart, dass das erste Bauteil im Bajonettspalt befestigt wird.

Während das Kupplungsteil in seiner axialen Richtung in das Schlüsselloch gedrückt wird, erfolgt entweder ein gleichzeitiges Komprimieren des Kupplungsteils durch einen radial inneren Rand des Schlüssellochs oder durch den Werker selbst, der das Kupplungsteil im Schlüsselloch installiert. Vorzugsweise wird das Kupplungsteil soweit in axialer Richtung in das Schlüsselloch eingesetzt, bis die mindestens eine radiale Anlagefläche, vorzugsweise der umlaufende Anlageflansch, am Bauteil anliegt. In dieser Position rastet das Bauteil in den Verrastungsspalt ein, sobald der Werker eine radiale Kompression des Kupplungsteils entlastet. Vorzugsweise wird nachfolgend das Kupplungsteil um seine Längsachse gedreht, wozu der Werker bspw. die bereits oben beschriebene stegartige Struktur nahe der Einführöffnung für das bolzenartige Element verwendet. Die Drehung des Kupplungsteils um seine Längsachse verrastet das Bauteil im Bajonettspalt.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine bevorzugte Ausführungsform eines Kupplungsteils der erfindungsgemäßen Steckverbindung eingesetzt in einem Schlüsselloch eines Bauteils,
- Figur 2: eine perspektivische Ansicht einer bevorzugten Ausführungsform des Kupplungsteils,
- Figur 3: eine Seitenansicht einer weiteren bevorzugten Ausführungsform des Kupplungsteils,
- Figur 4: eine Schnittansicht entlang der Linie IV-IV aus Figur 3,
- Figur 5: eine perspektivische Ansicht der Einführöffnung des Kupplungsteils gemäß Figur 3 und
- Figur 6: eine bevorzugte Ausführungsform der erfindungsgemäßen Steckverbindung bestehend aus Kupplungsteil und bolzenähnlichem Element, wobei das Kupplungsteil im ersten Bauteil installiert ist.

### 5. Detaillierte Beschreibung der bevorzugten Ausführungsformen

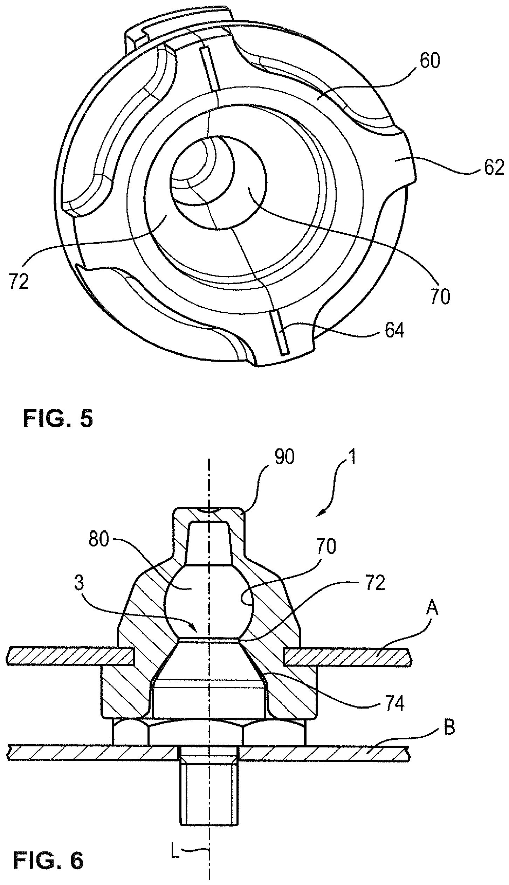

Figur 6 zeigt im Schnitt eine bevorzugte Ausführungsform der erfindungsgemäßen Stecckupplung, die sich aus einem Kupplungsteil 1 und einem bolzenartigen Element 3 zusammensetzt. Über eine Rastverbindung wird ein Kopf 70 des bolzenartigen Elements 3 in einem inneren Verbindungsbereich des Kupplungsteils 1 gehalten. Das Kupplungsteil 1 ist über einen äußeren Befestigungsbereich mit einem ersten Bauteil A verbunden. Das bolzenartige Element 3 ist mit einem zweiten Bauteil B verbunden, sodass die Steckkupplung 1, 3 die beiden Bauteile A, B lösbar miteinander verbindet. Vorzugsweise ist das bolzenartige Element 3 ein Bolzen mit einem Kugelkopf 80, der in einer Kugelpfanne 70 des Kupplungsteils 1 formschlüssig gehalten wird. Für die Rastverbindung zwischen dem Kupplungsteil 1 und dem bolzenartigen Element 3 sind auch andere formschlüssige Verbindungen bevorzugt, wie bspw. eine tropfenförmige, elliptische oder pyramidenartige Verdickung als Kopf und einer in der Form daran angepassten Aufnahme 70. Zur Unterstützung der formschlüssigen Verbindung, die im Weiteren anhand des Beispiels des Kugelkopfs 80 und der Kugelpfanne 70 erläutert wird, ist eine Rastkante 72 vorgesehen. Die Rastkante 72 ist im inneren Verbindungsbereich des Kupplungsteils durchgehend umlaufend oder in Abschnitte unterbrochen angeordnet. Die Rastkante 72 verringert eine Durchgangsöffnung für den Kugelkopf, wobei die Durchgangsöffnung einen Durchmesser kleiner als der maximale Außendurchmesser des Kugelkopfs 80 aufweist. Beim Verbinden des Kupplungsteils 1 und des bolzenartigen Elements 3 überwindet der Kugelkopf 80 die Rastkante 72 beim Einsetzen und stellt auf diese Weise eine Rastverbindung her.

An den Kugelkopf 80 schließt sich ebenfalls bevorzugt ein konischer Bereich 84 an. Der konische Bereich 84 unterstützt den Halt des Kugelbolzens 3 im Kupplungsteil 1. Dazu wird der konische Bereich 84 bevorzugt in einem an ihn angepassten konischen Aufnahmebereich 74 des Kupplungsteils 1 aufgenommen. Durch die Anlage des konischen Bereichs 84 am konischen Aufnahmebereich 74 wird ein fester Sitz des Kugelbolzens 3 am Kupplungsteil 1 erzielt. Es ist ebenfalls bevorzugt, den konischen Aufnahmebereich 74 größer als den konischen Bereich 84 des bolzenartigen Elements 3 auszubilden. Auf diese Weise wird eine begrenzte Bewegbarkeit des Kugelbolzens 3 in einem bestimmten Raumwinkel innerhalb des Kupplungsteils 1 ermöglicht, um bspw. Toleranzen zwischen den beiden Bauteilen A, B auszugleichen.

Das bolzenartige Element 3 besteht vorzugsweise aus einem starren Material, wie bspw. Kunststoff oder Metall. Das Kupplungsteil 1 ist aus einem elastisch verformbaren bzw. federnden Material hergestellt, wie bspw. Kunststoff oder Metall. Zu den Kunststoffen zählen elastische Kunststoffe, speziell Silikone und technischer Gummi.

Vorteilhafterweise ist das Material des Kupplungsteils 1 derart gewählt, dass die Materialelastizität bzw. Verformbarkeit Schwingungen zwischen den Bauteilen A, B dämpft oder vollständig in sich aufnimmt.

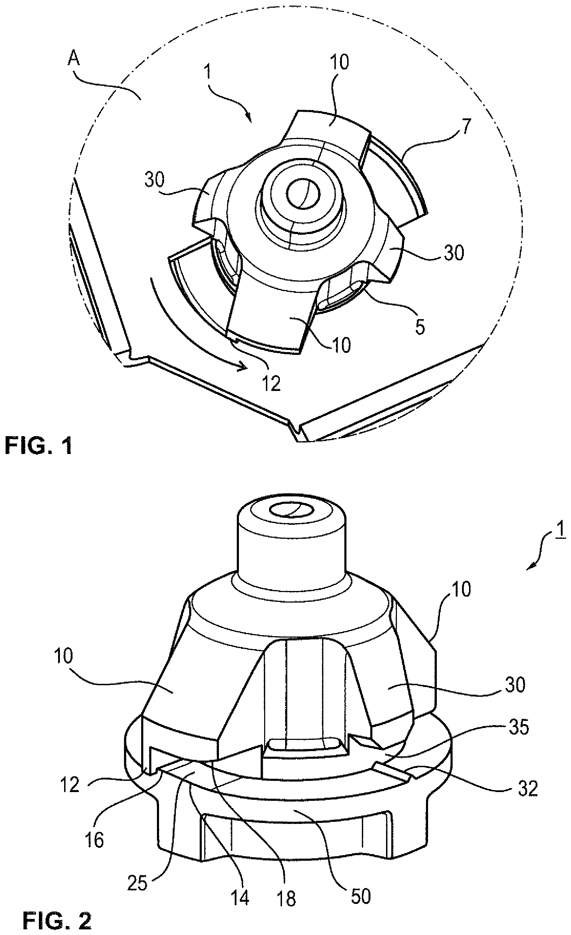

Wie anhand der bevorzugten Ausführungsform vorliegender Erfindung in Fig. 1 dargestellt ist, wird das Kupplungsteil 1 in einem Schlüsselloch 5, 7 des ersten Bauteils A installiert. Das Schlüsselloch 5, 7 umfasst eine zentrale Bohrung 5. Von dieser Bohrung 5 erstreckt sich in radialer Richtung mindestens eine radiale stegförmige Ausbuchtung 7. Vorzugsweise werden im Schlüsselloch 5, 7 zwei einander gegenüberliegend angeordnete Ausbuchtungen 7 genutzt. Der Durchmesser der zentralen Bohrung 5 des Schlüssellochs 5, 7 ist an den Außendurchmesser des Kupplungsteils 1 in einem Bajonettspalt 25 und einem Verrastungsspalt 35 (siehe unten) angepasst. Zudem ist die Form der mindestens einen stegförmigen Ausbuchtung 7 vorzugsweise an die Form eines ersten radialen Vorsprungs 10 (siehe unten) angepasst, um diesen radialen Vorsprung 10 und das gesamte Kupplungsteil 1 in das Schlüsselloch 5, 7 einsetzen zu können.

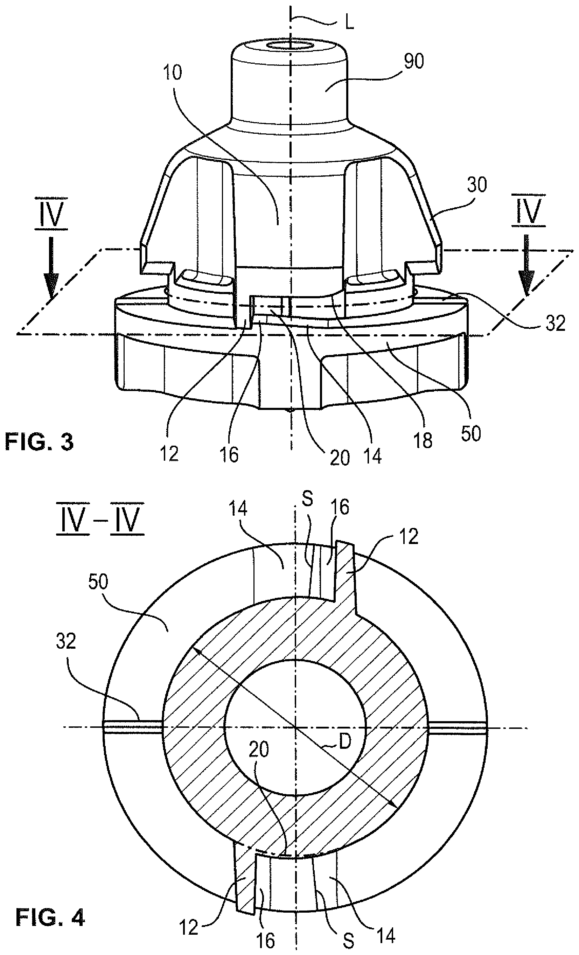

Um das Kupplungsteil 1 im Schlüsselloch 5, 7 des Bauteils A zu installieren bzw. zu befestigen, wird das Kupplungsteil 1 zunächst in Richtung seiner Längsachse L (siehe Figuren 3 und 6) axial in das Schlüsselloch 5, 7 gesteckt. Dabei sind die ersten radialen Vorsprünge 10 derart auf die Ausbuchtungen 7 ausgerichtet, dass die radialen Vorsprünge 10 durch die Ausbuchtung 7 hindurch gesteckt werden können. Während des Einsetzens des Kupplungsteils 1 in das Schlüsselloch 5 ist mindestens ein zweiter radialer Vorsprung 30, vorzugsweise eine Mehrzahl umfänglich verteilter zweiter radialer Vorsprünge 30, außerhalb der Ausbuchtung 7 angeordnet. Durch die axiale Einsetzbewegung des Kupplungsteils 1 in das Schlüsselloch 5, 7 wird der mindestens eine zweite radiale Vorsprung 30 in radialer Richtung durch den Rand der Bohrung 5 komprimiert und schnappt im weiteren Verlauf der Einsetzbewegung in das Schlüsselloch 5, 7 ein.

Während die zweiten radialen Vorsprünge 30 bereits am ersten Bauteil A verrastet sind, wird der Bajonettverschluss zwischen dem ersten Bauteil A und dem Kupplungsteil 1 durch Drehen des Kupplungsteils 1 in Pfeilrichtung gemäß Fig. 1 hergestellt. Vorzugsweise wird das Kupplungsteil 1 nur soweit gedreht, dass der zweite radiale Vorsprung 30 außerhalb der Ausbuchtungen 7 angeordnet ist. Basierend auf der axialen Einsetzbewegung des Kupplungsteils 1 in das Schlüsselloch 5, 7, der dadurch erzeugten Verrastung durch die zweiten radialen Vorsprünge 30 und durch die nachfolgende Drehung des Kupplungsteils 1 wird ein kombinierter Bajonett- und Rastverschluss zwischen dem Kupplungsteil 1 und dem Bauteil A hergestellt.

Nachdem das Kupplungsteil 1 im Schlüsselloch 5, 7 des Bauteils A installiert worden ist, wird das bolzenartige Element 3, vorzugsweise der Kugelbolzen, in das Kupplungsteil 1 eingesetzt und dort verrastet. Auf diese Weise wird die Steckverbindung zwischen den Bauteilen A, B hergestellt. Zum Lösen der Steckverbindung zwischen den Bauteilen A, B wird der Kugelbolzen aus dem Kupplungsteil 1 entfernt. Das Kupplungsteil 1 ist vorzugsweise aus dem Schlüsselloch 5, 7 entfernbar, indem das Kupplungsteil 1 zunächst entgegen der Pfeilrichtung gemäß Fig. 1 gedreht wird. Durch diese Drehung um die Längsachse L des Kupplungsteils werden die ersten radialen Vorsprünge 10 auf die Ausbuchtungen 7 des Schlüssellochs 5, 7 ausgerichtet. Durch eine Kompression des Kupplungsteils 1 in radialer Richtung werden vorzugsweise die zweiten radialen Vorsprünge 30 aus ihrer Verrastung mit dem Bauteil A gelöst. Nach Lösung der Verrastung der zweiten radialen Vorsprünge 30 wird das Kupplungsteil 1 parallel zu seiner Längsachse L aus dem Schlüsselloch 5, 7 gezogen.

In den Figuren 2-5 sind die bevorzugten konstruktiven Details des erfindungsgemäßen Kupplungsteils dargestellt. Der mindestens eine erste radiale Vorsprung 10, vorzugsweise zwei einander gegenüberliegend angeordnete radiale Vorsprünge 10, dient der Herstellung des Bajonettverschlusses bzw. der Bajonettverbindung mit dem ersten Bauteil A. In Abhängigkeit von der Anzahl der Ausbuchtungen 7 des Schlüssellochs ist ein oder eine Mehrzahl von ersten radialen Vorsprüngen vorgesehen.

In einem bestimmten Drehwinkel beabstandet vom ersten radialen Vorsprung 10 ist mindestens ein oder eine Mehrzahl zweiter radialer Vorsprünge 30 angeordnet. Vorzugsweise werden zwei zweite radiale Vorsprünge 30 einander gegenüberliegend am Kupplungsteil 1 genutzt. Das Material der zweiten radialen Vorsprünge 30 ist derart flexibel, dass beim Einsetzen des Kupplungsteils 1 in das Schlüsselloch 5, 7 die zweiten radialen Vorsprünge 30 in radialer Richtung komprimierbar und somit in das Schlüsselloch 5, 7 einrastbar sind.

Bezogen auf die Längsachse L des Kupplungsteils 1 ist in axialer Richtung dem ersten 10 und dem zweiten radialen Vorsprung 30 jeweils gegenüberliegend eine radiale Anlagefläche 50 angeordnet. Die radiale Anlagefläche 50 wird vorzugsweise durch einen umlaufenden radialen Anlageflansch 50 gebildet. Es ist ebenfalls denkbar, den Anlageflansch 50 durchbrochen vorzusehen, sodass eine Mehrzahl von umfänglich angeordneten radialen Anlageflächen den erforderlichen Halt des Kupplungsteils 1 bereitstellt. Durch die radialen Anlageflächen 50 gegenüber dem ersten 10 und dem zweiten radialen Vorsprung 30 wird entsprechend ein Bajonettspalt 25 und ein Verrastungsspalt 35 gebildet, wie in Fig. 2 gezeigt ist. In dem Bajonettspalt 25 wird aufgrund der Drehung des Kupplungsteils 1 während seiner Installation der Randbereich des Schlüssellochs 5, 7 aufgenommen. Durch die axiale Bewegung des Kupplungsteils 1 während seiner Installation wird der Randbereich des Schlüssellochs 5, 7 verrastend in dem Verrastungsspalt 35 aufgenommen.

Zum Herstellen der Bajonettverbindung zwischen dem Kupplungsteil 1 und dem Bauteil A wird das Kupplungsteil 1 um seine Längsachse L zur Aufnahme des ersten Bauteils A im Bajonettspalt 25 gedreht. Um zu vermeiden, dass die bereits am Bauteil A verrasteten zweiten radialen Vorsprünge 30 durch die Drehung des Kupplungsteils 1 im Bereich der mindestens einen Ausbuchtung 7 vom Bauteil A gelöst werden, ist die Drehung des Kupplungsteils 1 durch eine Begrenzung der Spaltlänge des Bajonettspalts 25 limitiert. Dazu ist der Bajonettspalt 25 mithilfe eines axialen Vorsprungs 12, vorzugsweise eine Wand oder ein Steg, blockiert. Der Steg oder die Wand 12 erstreckt sich in Richtung der radialen Anlagefläche 50, sodass das Kupplungsteil 1 nur soweit im Schlüsselloch 5, 7 gedreht werden kann, bis ein seitlicher Rand der Ausbuchtung 7 am Steg 12 anliegt. Daraus folgt, dass der mindestens eine zweite radiale Vorsprung 30 in Abstimmung mit der Länge des Bajonettspalts 25 derart winklig beabstandet zum ersten radialen Vorsprung 10 angeordnet ist, dass er nach Herstellung der Bajonettverbindung zwischen dem Kupplungsteil 1 und dem Bauteil A nicht in der Ausbuchtung 7 angeordnet ist.

Der axiale Vorsprung 12 ist vorzugsweise am Ende des Bajonettspalts 25 angeordnet. Basierend auf dieser konstruktiven Ausgestaltung ist das Kupplungsteil 1 nur in einer Richtung im Schlüsselloch 5 drehbar, um den Bajonettverschluss herzustellen. Auf diese Weise wird der Installationsablauf für das Kupplungsteil 1 im Bauteil A vereinfacht, weil ein wahlfreies axiales Einsetzen und anschließendes Drehen des Kupplungsteils 1 in nur einer Richtung erfolgt.

Um den Halt des Kupplungsteils 1 am Bauteil A zu unterstützen, weist der der Bajonettspalt 25 vorzugsweise eine Einlaufschräge 14 und/oder eine weitere Einlaufschräge 18 auf. Mithilfe der mindestens einen Einlaufschräge 14, 18 verjüngt sich der Bajonettspalt 25 entgegen der Pfeilrichtung gemäß Fig. 1. Im Vergleich zueinander sind die schrägen Flächen 14, 18 vorzugsweise in unterschiedlichen Winkeln bezogen auf eine Radialebene des Kupplungsteils 1 geneigt angeordnet. Die schrägen Flächen 14, 18 dienen dem Ausgleich unterschiedlicher Dicken des Bauteils A, sodass immer ein fester Halt des Kupplungsteils 1 im Schlüsselloch 5, 7 des Bauteils A gewährleistet ist. Vorzugsweise ist am Ende des Bajonettspalts 25 noch eine weitere schräge oder gerade Fläche 16 angeordnet. Gemäß einer weiteren bevorzugten Ausführungsform vorliegender Erfindung sind anstelle der mindestens einen Einlaufschräge 14, 18 auch axiale Vorsprünge einsetzbar, die den Bajonettspalt 25 verjüngen.

Der äußere Durchmesser des Kupplungsteils 1 im Bereich des Bajonettspalts 25 und des Verrastungsspalts 35 ist an den Innendurchmesser der Bohrung 5 des Schlüssellochs 5, 7 angepasst. Diese Anpassung ist nur mit Toleranzen möglich, um zunächst ein reibungsloses axiales Einsetzen des Kupplungsteils 1 in das Schlüsselloch 5, 7 zu ermöglichen. Für einen festen Sitz des Kupplungsteils 1 im Schlüsselloch 5, 7 ist vorzugsweise eine radiale Verjüngung des Bajonettspalts 25 vorgesehen. Anhand von Fig. 4 ist erkennbar, dass die radiale Breite des Bajonettspalts 45 durch den Abstand S definiert ist. Des Weiteren ist in Fig. 5 der Innendurchmesser der Bohrung 5 des Schlüssellochs 5, 7 durch die Strich-Punkt-Linie veranschaulicht. Um eine radiale Verjüngung des Bajonettspalts 25 zu erzielen, also eine Verkleinerung des Abstands S, ist der Außendurchmesser D des Kupplungsteils im Bajonettspalt 25 lokal vergrößert. Dies wird durch die durchgezogene Linie im Bajonettspalt 25 im Vergleich zur Strich-Punkt-Linie dargestellt, die eine radiale Verjüngung des Bajonettspalts 25 entgegen der Eindrehrichtung des Kupplungsteils 1 (siehe Fig. 1) zur Folge hat. Diese radiale Verjüngung kann vorzugsweise stetig erfolgen, wie es in Fig. 4 veranschaulicht ist. Es ist ebenfalls bevorzugt, diese radiale Verjüngung des Bajonettspalts 25 lokal begrenzt oder punktuell, bspw. mit einem radial orientierten Vorsprung, zu erzielen. Mithilfe dieser bevorzugten radialen Verjüngung des Bajonettspalts 25 wird ein verbesserter Halt des Kupplungsteils 1 im Schlüsselloch 5, 7 durch eine radiale Kompression des Kupplungsteils 1 zumindest im Bereich des Bajonettspalts 25 erzielt. Es ist ebenfalls bevorzugt, eine derartige radiale Verjüngung im Verrastungsspalt 35 vorzusehen.

Der Verrastungsspalt 35 weist gemäß einer weiteren Ausführungsform vorliegender Erfindung eine Verjüngung in axialer Richtung bezogen auf die Längsachse L des Kupplungsteils 1 auf. Gemäß einer konstruktiven Alternative ist ein Steg 32 in radialer Richtung verlaufend auf dem Anlageflansch 50 angeordnet, um diese Verjüngung zu bilden. Mithilfe des Stegs 32 ist ein Toleranzausgleich bspw. in Bezug auf unterschiedliche Dicken des Bauteils A erreichbar. Gemäß einer weiteren konstruktiven Alternative ist anstelle des Stegs 32 eine schräge Fläche in Analogie zu den Einlaufschrägen 14, 18 des Bajonettspalts 25 nutzbar.

Fig. 5 zeigt eine perspektivische Ansicht des Kupplungsteils 1 von unten. Benachbart zur Einführöffnung für den Kugelbolzen ist eine stegartige Struktur 60 mit radial verlaufenden Abschnitten 62 vorgesehen. Durch die bevorzugte stegartige Struktur 60 wird das Greifen und das Eindrücken des Kupplungsteils 1 in axialer Richtung bzw. das Einrasten des Kupplungsteils 1 in das Schlüsselloch 5, 7 durch den Werker erleichtert. Zudem unterstützen gerade die radialen Abschnitte 62 das Drehen des Kupplungsteils 1 in Pfeilrichtung (siehe Fig. 1), um die Bajonettverbindung herzustellen.

Vorzugsweise umfasst die stegartige Struktur 60 eine Orientierungshilfe 64 für den Werker. Die Orientierungshilfe 64 zeigt dem Werker an, wo die ersten radialen Vorsprünge 10 zur Herstellung der Bajonettverbindung angeordnet sind. Auf diese Weise kann der Werker leichter eine Ausrichtung der ersten Vorsprünge 30 auf die Ausbuchtungen 7 des Schlüssellochs 5 vornehmen.

Gemäß einer weiteren bevorzugten Ausführungsform vorliegender Erfindung umfasst das Kupplungsteil 1 einen axialen Vorsprung 90, der gegenüber der Einführöffnung für den Kugelbolzen angeordnet ist (vgl. Fig. 3 und 6). Der axiale Vorsprung 90 dient dem Ausgleich von Toleranzen bei der Installation des Kupplungsteils 1. Es ist ebenfalls bevorzugt, auf den axialen Vorsprung 90 zu verzichten, dass Kupplungsteil 1 an der Stelle des axialen Vorsprungs 90 geschlossen oder offen auszubilden. Diese verschiedenen konstruktiven Ausgestaltungsmöglichkeiten sind in Abhängigkeit vom Anwendungsfall der Steckkupplung wählbar, um bspw. das Schwingungsdämpfungsverhalten der Steckkupplung zu optimieren.

### Bezugszeichenliste

- A, B: Bauteil
- 1: Kupplungsteil
- 3: bolzenartiges Element
- 5: Schlüsselloch
- 7: Ausbuchtung
- 10: erster radialer Vorsprung
- 12: Steg, Wand
- 14, 16, 18: Einlaufschräge
- 20: radiale Verjüngung
- 25: Bajonettspalt
- 30: zweiter radialer Vorsprung
- 32: Steg
- 35: Verrastungsspalt
- 50: radiale Anlagefläche, Anlageflansch
- 60: stegartige Struktur
- 62: radialer Abschnitt
- 64: Orientierungshilfe
- 70: Kugelpfanne
- 72: Rastkante
- 74: konischer Bereich
- 80: Kopf
- 84: konischer Bereich
- 90: axialer Vorsprung
- L: Längsachse
- D: Außendurchmesser des Kupplungsteils

## Patentansprüche

1. Elastisch verformbares Kupplungsteil (1) für eine Steckverbindung zum Verbinden eines ersten Bauteils (A) und eines zweiten Bauteils (B), das die folgenden Merkmale aufweist:
a. einen inneren Verbindungsbereich, in den über eine Rastverbindung ein Kopf (80) eines bolzenartigen Elements (3) des zweiten Bauteils (B) aufnehmbar ist, und einen äußeren Befestigungsbereich, der über einen Bajonettverschluss mit einem Schlüsselloch (5) des ersten Bauteils (A) verbindbar ist, wobei
b. der Befestigungsbereich mindestens eine radiale Anlagefläche (50) umfasst, von der axial beabstandet mindestens ein erster radialer Vorsprung (10) angeordnet ist, der einen Bajonettspalt (25) für eine drehende Aufnahme des ersten Bauteils (A) bildet, und **dadurch gekennzeichnet, dass**
c. von der radialen Anlagefläche (50) axial beabstandet mindestens ein zweiter radialer Vorsprung (30) angeordnet ist, der über eine radial einwärts gerichtete Bewegbarkeit einen Verrastungsspalt (35) für das erste Bauteil (A) zwischen zweitem Vorsprung (30) und der mindestens einen radialen Anlagefläche (50) bildet, wobei
d. der Bajonettspalt (25) in Abstimmung mit der Anordnung des zweiten radialen Vorsprungs (30) nach einer bestimmten Länge blockiert ist, sodass bei einer Drehung des Kupplungsteils (1) um eine Längsachse (L) das erste Bauteil (A) im Bereich des Schlüssellochs (5) nicht aus dem Verrastungsspalt (35) entfernbar ist.

2. Kupplungsteil (1) nach Anspruch 1, in dem der erste (10) und zweite Vorsprung (30) umfänglich versetzt zueinander angeordnet sind.

3. Kupplungsteil (1) gemäß einem der vorhergehenden Ansprüche, in dem der Bajonettspalt (25) sich zumindest teilweise in radialer und/oder in axialer Richtung des Kupplungsteils (1) verjüngend ausgebildet ist, um einen verlässlichen Halt am ersten Bauteil (A) zu unterstützen.

4. Kupplungsteil (1) gemäß einem der vorhergehenden Ansprüche, in dem der Verrastungsspalt (35) in axialer Richtung bezogen auf das Kupplungsteil (1) zumindest teilweise verjüngt ausgebildet ist.

5. Kupplungsteil (1) gemäß einem der vorhergehenden Ansprüche, in dem benachbart zu einer Einführöffnung des bolzenartigen Elements (3) eine stegartige Struktur (60) vorgesehen ist, mit der das Kupplungsteil (1) in das Schlüsselloch (5) einsetzbar, vorzugsweise eindreh- und einrastbar, ist.

6. Kupplungsteil (1) gemäß einem der vorhergehenden Ansprüche, in dem die mindestens eine radiale Anlagefläche (50) durch einen umlaufenden und zusammenhängenden Anlageflansch (50) gebildet wird.

7. Kupplungsteil (1) gemäß Anspruch 6, in dem der Anlageflansch (50) als Dichtlippe ausgebildet ist, die aufgrund der radialen Ausdehnung das Schlüsselloch (5) vollständig abdeckt.

8. Kupplungsteil (1) gemäß einem der vorhergehenden Ansprüche, das aus einem elastischen Kunststoff oder aus Metall besteht.

9. Steckkupplung, die ein Kupplungsteil (1) gemäß einem der vorhergehenden Ansprüche und ein bolzenartiges Element (3) mit einem Kopf (80) umfasst.

10. Bauteil (B) mit einem bolzenartigen Element (3) und einem Kopf (80), das mit einem anderen Bauteil (A) über ein Kupplungsteil (1) gemäß einem der Ansprüche 1-8 verbunden ist, welches in einem Schlüsselloch (5) des anderen Bauteils (A) angeordnet ist.

11. Einbauverfahren eines Kupplungsteils (1) gemäß einem der Ansprüche 1 bis 8 in ein Schlüsselloch (5) eines Bauteils (A), das die Schritte umfasst:
a. Ausrichten des Kupplungsteils (1) auf das Schlüsselloch (5), sodass der mindestens eine erste radiale Vorsprung (10) gegenüber einer stegförmigen Ausbuchtung (7) des Schlüssellochs (5) angeordnet ist,
b. Einsetzen des Kupplungsteils (1) in axialer Richtung in das Schlüsselloch (5) und gleichzeitiges Komprimieren des Kupplungsteils (1) in radialer Richtung, um das erste Bauteil (A) im Verrastungsspalt (35) einzurasten, und
c. Drehen des Kupplungsteils (1) um die Längsachse (L) derart, dass das erste Bauteil (A) im Bajonettspalt (25) befestigt wird.

12. Einbauverfahren gemäß Anspruch 11, wobei das Kupplungsteil (1) soweit in axialer Richtung in das Schlüsselloch (5) eingesetzt wird, bis die mindestens eine radiale Anlagefläche (50), vorzugsweise der umlaufende Anlageflansch (50), am Bauteil (A) anliegt.

13. Einbauverfahren gemäß Anspruch 11 oder 12, wobei zum Drehen des Kupplungsteils (1) um die Längsachse (L) eine stegartige Struktur (60) nahe einer Einführöffnung für ein bolzenartiges Element (3) verwendet wird.

## Claims

1. Elastically deformable coupling part (1) for a plug-in connection for connecting a first component (A) and a second component (B), which has the following features:
a. an inner connection portion, in which a head (80) of a pin-like element (3) of the second component (B) is receivable by means of a detent connection, and an outer fastening portion, which is connectable with a keyhole (5) of the first component (A) by means of a bayonet closure, wherein
b. the fastening portion comprises at least one radial contact surface (50), from which at least one first radial projection (10) is arranged at an axial distance, the first radial projection (10) forming a bayonet gap (25) for a rotational accommodation of the first component (A), and **characterized in that**
c. at an axial distance from the radial contact surface (50), at least a second radial projection (30) is arranged, which forms a locking gap (35) for the first component (A) between the second projection (30) and the at least one radial contact surface (50) by means of a movability directed radially inward, wherein
d. the bayonet gap (25) is blocked after a certain length in coordination with the arrangement of the second radial projection (30) so that the first component (A) in the area of the keyhole (5) is not removable from the locking gap (15) during a rotation of the coupling part (1) about its longitudinal axis (L).

2. Coupling part (1) according to claim 1, in which the first (10) and the second projection (30) are arranged circumferentially offset with respect to each other.

3. Coupling part (1) according to one of the previous claims, in which the bayonet gap (25) is formed in a tapering manner at least partially in radial and/or axial direction of the coupling part (1), in order to support a reliable hold on the first component (A).

4. Coupling part (1) according to one of the previous claims, in which the locking gap (35) is formed at least partially tapered in axial direction with respect to the coupling part (1).

5. Coupling part (1) according to one of the previous claims, in which a web-like structure (60) is provided adjacent to an insertion opening of the pin-like element (3), with which the coupling part (1) is insertable, preferably screwable and lockable, into the keyhole (5).

6. Coupling part (1) according to one of the previous claims, in which the at least one radial contact surface (50) is formed by a circumferential and continuous contact flange (50).

7. Coupling part (1) according to claim 6, in which the contact flange (50) is formed as a sealing lip, which completely covers the keyhole (5) due to the radial expansion.

8. Coupling part (1) according to one of the previous claims, which is made of an elastic plastic or of metal.

9. Plug-in coupling which comprises a coupling part (1) according to one of the previous claims and a pin-like element (3) with a head (80).

10. Component (B) with a pin-like element (3) and a head (80), which is connected with another component (A) via a coupling part (1) according to one of claims 1-8, which is arranged in a keyhole (5) of the other component (A).

11. Installation method of a coupling part (1) according to one of the claims 1 to 8 into a keyhole (5) of a component (A), which comprises the steps:
a. aligning of the coupling part (1) to the keyhole (5) so that the at least one first radial projection (10) is arranged opposite a web-like bulge (7) of the keyhole (5),
b. inserting of the coupling part (1) in axial direction into the keyhole (5) and at the same time compressing of the coupling part (1) in radial direction in order to lock the first component (A) in the locking gap (35) and
c. rotating of the coupling part (1) about the longitudinal axis (L) such that the first component (A) is fastened in the bayonet gap (25).

12. Installation method according to claim 11, wherein the coupling part (1) is inserted so far into the keyhole (5) in axial direction until the at least one radial contact surface (50), preferably the circumferential contact flange (50), rests on the component (A).

13. Installation method according to claim 11 or 12, wherein a web-like structure (60) near an insertion opening for a pin-like element (3) is used for rotating the coupling part (1) about the longitudinal axis (L).

## Revendications

1. Élément de couplage (1) déformable élastiquement pour un assemblage par emboîtement destiné à assembler un premier composant (A) et un deuxième composant (B), présentant les caractéristiques suivantes :
a. une zone d'assemblage intérieure, dans laquelle une tête (80) d'un élément du genre boulon (3) du deuxième composant (B) peut être reçue par encliquetage, et une zone de fixation extérieure apte à être assemblée avec un trou de serrure (5) du premier composant (A) par une fermeture à baïonnette, dans lequel
b. la zone de fixation comporte au moins une surface d'appui radiale (50), au moins une première saillie radiale (10) étant disposée de façon axialement espacée par rapport à celle-ci, formant ainsi une fente à baïonnette (25) pour un logement rotatif du premier composant (A), et **caractérisé en ce que**
c. au moins une deuxième saillie radiale (30) est disposée de façon axialement espacée par rapport à la surface d'appui radiale (50), laquelle forme une fente d'encliquetage (35) pour le premier composant (A) entre la deuxième saillie (30) et l'au moins une surface d'appui radiale (50) du fait d'une mobilité orientée radialement vers l'intérieur, dans lequel
d. la fente à baïonnette (25) est bloquée à une longueur définie en accord avec l'agencement de la deuxième saillie radiale (30), de telle façon que lors d'une rotation de l'élément de couplage (1) autour d'un axe longitudinal (L), le premier composant (A) ne peut être retiré de la fente d'encliquetage (35) dans la région du trou de serrure (5).

2. Élément de couplage (1) selon la revendication 1, dans lequel la première (10) et la deuxième saillie (30) sont disposées de façon circonférentiellement décalée l'une par rapport à l'autre.

3. Élément de couplage (1) selon l'une des revendications précédentes, dans lequel la fente à baïonnette (25) est conçue de manière à se rétrécir au moins partiellement dans la direction radiale et/ou axiale de l'élément de couplage (1) afin de favoriser un maintien fiable sur le premier composant (A).

4. Élément de couplage (1) selon l'une des revendications précédentes, dans lequel la fente d'encliquetage (35) est conçue de manière à se rétrécir au moins partiellement dans la direction axiale par rapport à l'élément de couplage (1).

5. Élément de couplage (1) selon l'une des revendications précédentes, dans lequel il est prévu une structure du genre nervure (60) adjacente à une ouverture d'insertion de l'élément du genre boulon (3), avec laquelle l'élément de couplage (1) peut être inséré dans le trou de serrure (5), de préférence par vissage ou par encliquetage.

6. Élément de couplage (1) selon l'une des revendications précédentes, dans lequel l'au moins une surface d'appui radiale (50) est formée par une bride d'appui (50) circonférentielle et associée.

7. Élément de couplage (1) selon la revendication 6, dans lequel la bride d'appui (50) est conçue comme une lèvre d'étanchéité recouvrant entièrement le trou de serrure (5) du fait de son extension radiale.

8. Élément de couplage (1) selon l'une des revendications précédentes, lequel est constitué d'une matière plastique élastique ou de métal.

9. Système de couplage par emboîtement comportant un élément de couplage (1) selon l'une des revendications précédentes, ainsi qu'un élément du genre boulon (3) avec une tête (80).

10. Composant (B) comprenant un élément du genre boulon (3) et une tête (80), lequel est assemblé avec un autre composant (A) par le biais d'un élément de couplage (1) selon l'une des revendications 1 à 8, lequel est disposé dans un trou de serrure (5) de l'autre composant (A).

11. Procédé de montage d'un élément de couplage (1) selon l'une des revendications 1 à 8 dans un trou de serrure (5) d'un composant (A), comportant les étapes suivantes :
a. orientation de l'élément de couplage (1) vers le trou de serrure (5), de telle façon que l'au moins une première saillie radiale (10) est disposée en face d'un renflement en forme de nervure (7) du trou de serrure (5),
b. insertion de l'élément de couplage (1) dans le trou de serrure (5) dans la direction axiale et compression simultanée de l'élément de couplage (1) dans une direction radiale, afin d'encliqueter le premier composant (A) dans la fente d'encliquetage (35), et
c. rotation de l'élément de couplage (1) autour de l'axe longitudinal (L) de manière à fixer le premier composant (A) dans la fente à baïonnette (25).

12. Procédé de montage selon la revendication 11, dans lequel l'élément de couplage (1) est inséré dans le trou de serrure (5) dans la direction axiale jusqu'à ce que l'au moins une surface d'appui radiale (50), de préférence la bride d'appui circonférentielle (50), s'appuie sur le composant (A).

13. Procédé de montage selon la revendication 11 ou 12, dans lequel une structure du genre nervure (60) est utilisée à proximité d'une ouverture d'insertion destinée à un élément du genre boulon (3) pour la rotation de l'élément de couplage (1) autour de l'axe longitudinal (L).
